# EUROPEAN PATENT SPECIFICATION

(11) **EP 2 403 721 B1**
(45) Date of publication and mention of the grant of the patent: **24.07.2013**
(21) Application number: 09787657.7
(22) Date of filing: 06.03.2009
(51) Int. Cl.: B60B 1/00, B60B 21/00

(54) **SPOKE WHEEL, PARTICULARLY FOR A TUBELESS-TYPE TYRE, INTENDED TO BE MOUNTED ON A VEHICLE, PARTICULARLY ON A MOTOR VEHICLE OR A MOTORCYCLE**
SPEICHENRAD, INSBESONDERE FÜR EINEN SCHLAUCHLOSEN REIFEN, ZUR BEFESTIGUNG AN EINEM FAHRZEUG, INSBESONDERE EINEM KRAFTFAHRZEUG ODER EINEM MOTORRAD
ROUE A RAYONS, EN PARTICULIER POUR UN PNEU DE TYPE SANS CHAMBRE A AIR, DESTINEE A ETRE MONTEE SUR UN VEHICULE, EN PARTICULIER SUR UN VEHICULE MOTORISE OU UNE MOTOCYCLETTE

(43) Date of publication of application: 11.01.2012
(73) Proprietor: Ruotemilano S.r.l., 20122 Milano (IT)
(72) Inventor: CROCCO, Pablo Ulises Rios, I-20138 Milano (IT)
(74) Representative: Crippa, Paolo Ernesto
(86) International application number: PCT/IT2009/000082
(87) International publication number: WO 2010/100660

(56) References cited:
- EP-A- 1 209 006
- EP-A- 2 052 875
- WO-A-2005/058613
- WO-A-2006/038239
- WO-A-2007/049317
- WO-A-2008/043734
- WO-A-2008/077860
- JP-A- 60 038 201

## Description

The present invention relates to a spoke wheel, in particular for a tubeless-type tyre, intended to be mounted on a vehicle, particularly on a motor vehicle or a motorcycle.

More specifically, the present invention relates to a spoke wheel according to the preamble of the annexed claim 1. Document WO 2005/058613 A1 discloses such a wheel.

An object of the present invention is to manufacture a spoke wheel of an improved type and the structure of which is particularly suitable to the use with a tubeless-type tyre.

This and other objects are achieved according to the present invention, due to a spoke wheel of the type specified above, and having the characteristics defined in the characterizing part of claim 1.

Further characteristics and advantages of the present invention will become clear from the following detailed description, given purely by way of non-limiting example, with reference to the annexed drawings, in which:
- Fig. 1 is a cutaway perspective view, partially showing an exemplary embodiment of a spoke wheel according to the present invention;
- Fig. 2 is a sectional partial view taken on an axial plane of the spoke wheel shown in Fig. 1;
- Fig. 3 is a sectional view of a portion of the rim of the spoke wheel shown in the preceding Figures;
- Fig. 3a is an enlarged view of the portion of the rim visible in Fig. 3 and obtained according to the line IIIa-IIIa;
- Fig. 4 is a view of one spoke of the spoke wheel shown in the preceding Figures;
- Fig. 5 is a top perspective view of a washer of the spoke wheel shown in the preceding Figures;
- Fig. 5a is a sectional view of the washer shown in Fig. 5;
- Fig. 6 is a sectional view of a hub of the spoke wheel shown in the preceding Figures; and
- Fig. 7 is a sectional view of implementation details of the assembling between rim and spoke of the spoke wheel shown in the preceding Figures.

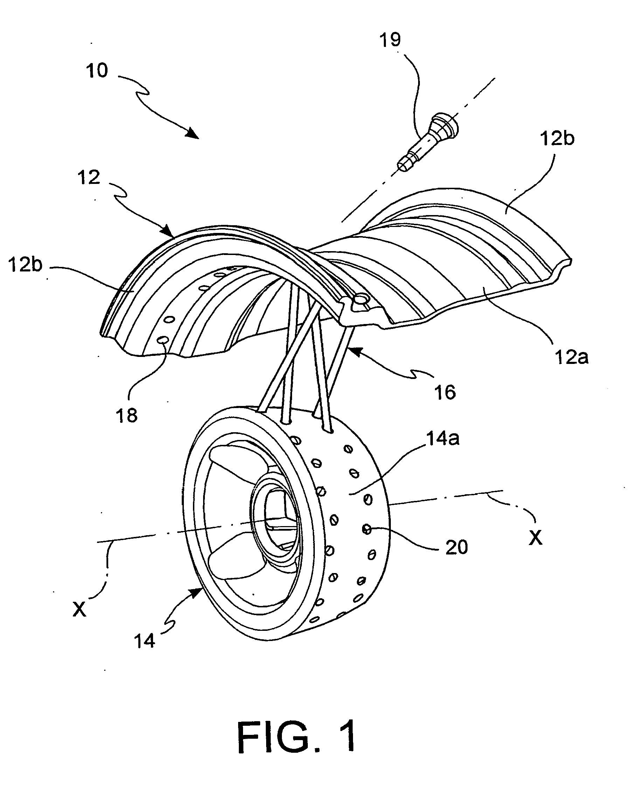

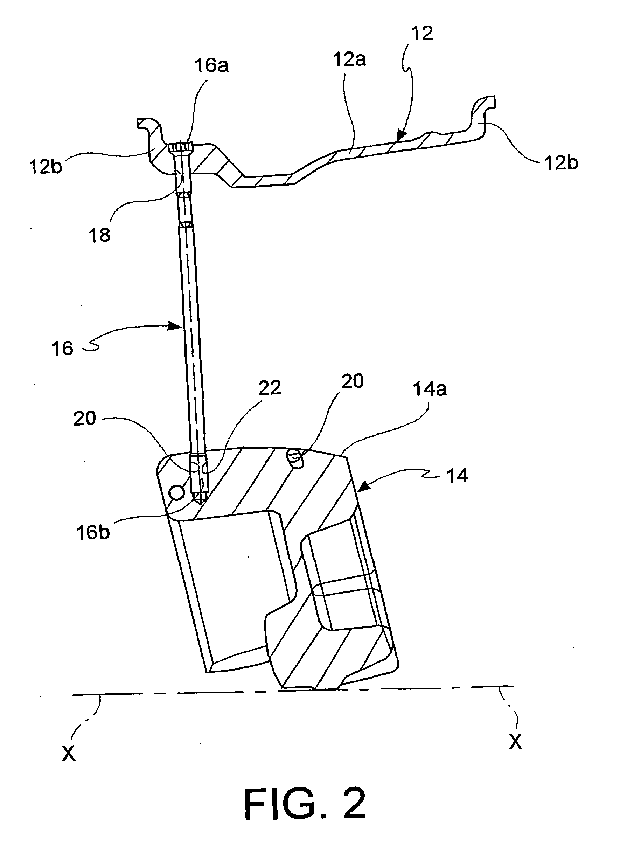

With reference in particular to Figures 1 and 2, an exemplary embodiment of a spoke wheel according to the present invention is generally indicated with 10.

In a *per se* known manner, the spoke wheel 10 includes a rim 12, a hub 14, which are mutually connected through a plurality of spokes 16. The spoke wheel 10 rotational axis is indicated with the line X-X visible in Figs. 1 and 2. As it shall be explained in the following of the present description, the spoke wheel 10 is intended to be mounted on a vehicle, particularly a motorcycle or a motor vehicle, and it is particularly suitable to the use in combination with tubeless-type tyres.

With reference still to Figures 1 and 2, the rim 12 has a plurality, or ring, of through-holes 18 located peripherally and through which the axially outer first ends 16a of the spokes 16 are connected. In the shown embodiment, such rim 12 defines a substantially channel-shaped cylindrical surface having a radially innermost bottom portion 12a, and a pair of flanks 12b radially projecting outwardly of the rim 12. The ring of through-holes 18 is located at the bottom portion 12a of the rim 12. Furthermore, a valve assembly 19 is applied in a *per se* known manner through the rim 12, intended to allow the inflating of the tubeless tyre when this is mounted on the wheel 10.

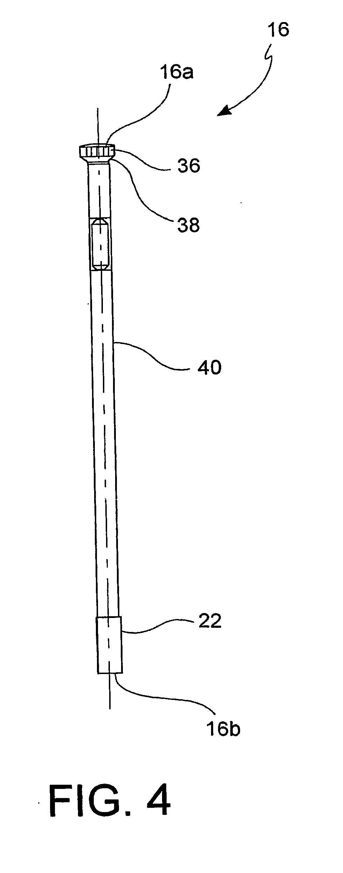

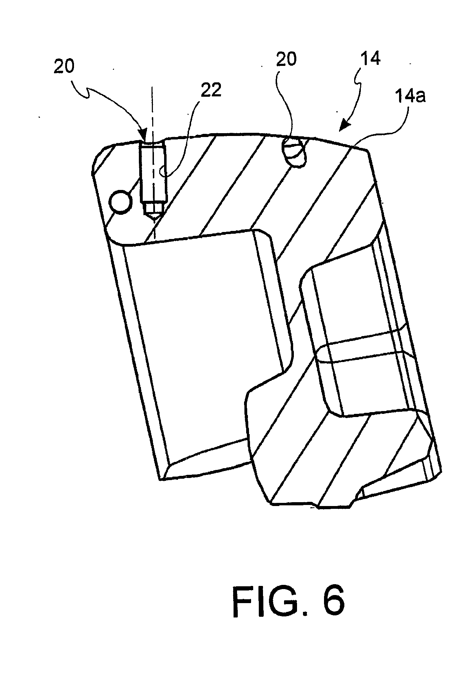

The hub 14 has a plurality of openings 20 obtained on the outer cylindrical surface 14a, which are coupled to the axially inner second ends 16b of the spokes 16. The openings 20 have respective inner threads 22 (see also Fig. 6) which engage with corresponding outer threads 24 (see Fig. 4) provided by the spokes 16 second ends 16b.

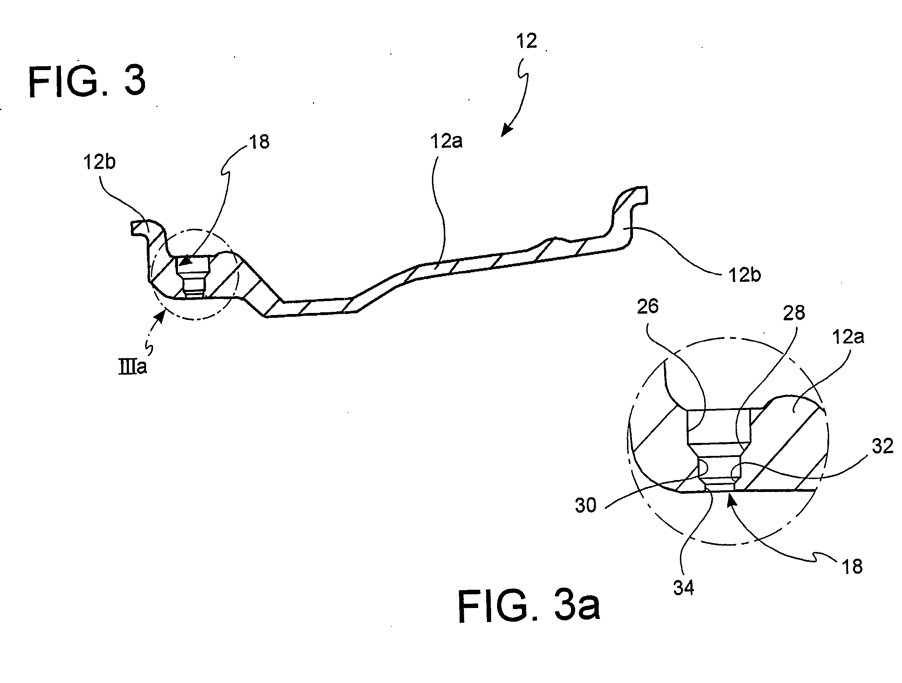

With reference in particular to Figs. 3 and 3a, the rim 12 of the exemplary embodiment of the spoke wheel 10 shown in Figs. 1 and 2 will be now described in more detail.

In such embodiment, the through-holes 18 have a substantially radially oriented axis, and have an inwardly decreasing diameter. More particularly, each of the through-holes 18 has, respectively, an axially outer initial length 26 having a major diameter and connecting through a first tapering 28 to a median length 30 having an intermediate diameter. In turn, the median length 30 connects through a second tapering 32 to a final length 34 of the axially inner hole having a minimum diameter. The first tapering 28 and the second tapering 32 define cavity segments of a substantially frusto-conical shape, the function of which will be explained in the following of the present invention.

With reference in particular to Fig. 4, one of the spokes 16 of the exemplary embodiment of the spoke wheel 10 shown in Figs. 1 and 2 will be now described in more detail.

In such embodiment, each of the spokes 16 has an enlarged head 36 at the first end 16a, which has a cross section of a substantially hexagonal shape. The enlarged head 36 proceeds through a connecting portion 38 thereof, which tapers and ends, with a fillet, in an elongated shaft 40 of cylindrical circular shape extending mainly in the axial direction, and ending in a portion bearing the outer thread 24. The connecting portion 38 defines a substantially frusto-conical length, the function of which will be explained in the following of the present description. Furthermore, in a *per se* known manner, the enlarged head 36 has a notch suitable to receive a screwdriver, or the cross section thereof is adapted to be received in a spoke wrench.

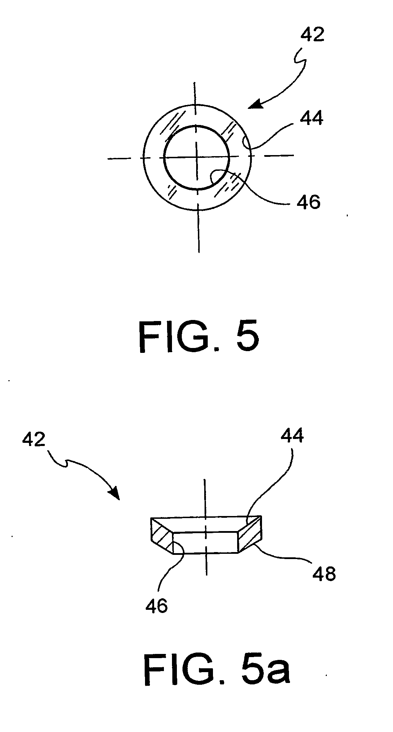

With reference in particular to Figs. 5 and 5a, one of the washers 42 adapted to be used in the assembling of the spokes 16 to the rim 12 in the exemplary embodiment of the spoke wheel 10 shown in Figs. 1 and 2 will be now described.

In such embodiment, the washer 42 has a substantially shaped-ring conformation surrounding a through central opening. The central opening has a first portion 44 having a tapering shape inwardly of the washer 42, and terminating in a second portion 46 having a circular cylindrical shape with a minimum diameter. Therefore, the first portion 44 defines a substantially frusto-conical cavity length. Furthermore, in the region in which the first portion is located, the washer 42 has an annular base 48 tapering outwardly of the washer 42. Therefore, the annular base 48 defines a substantially frusto-conical surface. In the assembling

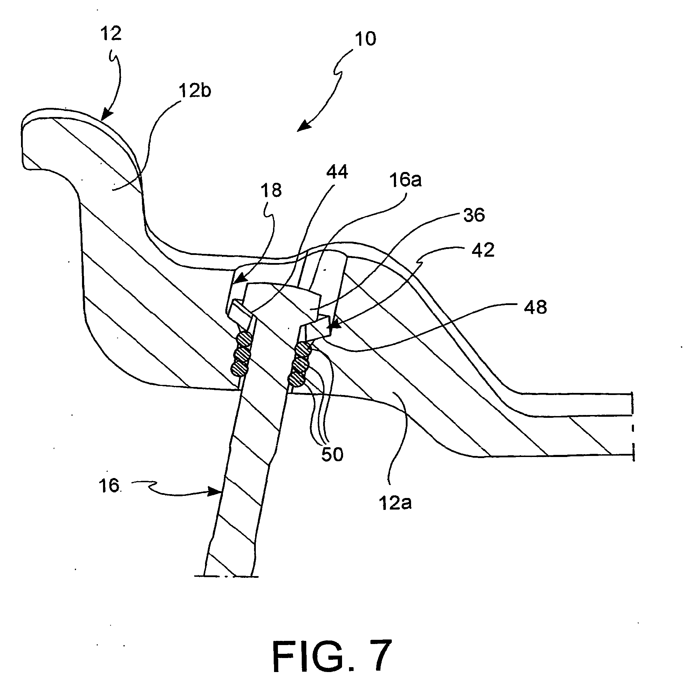

With reference in particular to Fig. 7, details relative to the mounted condition of one of the spokes 16 on the rim 12 in the exemplary embodiment of the spoke wheel 10 shown in Figs. 1 and 2 are illustrated.

In such embodiment, it shall be noted that, in the assembled condition, each spoke 16 is fluid-tight connected with the rim 12 through the corresponding through-hole 18.

Suitably, a first sealing member and - preferably - a second, and - optionally - a third sealing members located around corresponding spoke 16 are interposed between each of the spokes 16 and the associated through-hole 18. Advantageously, each sealing member is an O-ring 50. Such O-rings 50 are stacked one on the other and located around the corresponding spoke 16.

Preferably, the plurality of O-rings 50 axially rests against the rim 12 at an abutting portion obtained in the corresponding through-hole 18. In the illustrated embodiment, the abutting portion is given by the inner surface of the second tapering 32 of the through-hole 18.

Preferably, each of the washers 42 is axially located between the corresponding enlarged head 36 of each spokes 16 and the O-rings 50 stacked one on the other.

Advantageously, each of the washers 42 is axially locked between the corresponding enlarged head 36 of each of the spokes 16 and a shoulder portion obtained in the corresponding through-hole 18. In the illustrated embodiment, the shoulder portion is given by the first tapering 28 of the through-hole 18. As it is visible in Fig. 7, the washers 42 abut against the respective stack of mutually overlapping O-rings 50.

Preferably, each of the washers 42 defines a respective second rest surface which is supported by the shoulder portion 28 of the corresponding through-hole 18, and converging towards the inside of the rim 12. In the illustrated embodiment, such first rest surface is defined by the first portion 44 of the through opening of the washer 42 supporting the head 36 connecting portion 38. The shape of the first rest surface allows some tolerance in the spoke 16 slope relative to the axis of the respective hole 18, so as to facilitate the assembling of the shaft 40 in the respective opening 20 of the hub 14.

Advantageously, each of the washers 42 defines a respective second rest surface which is supported by the shoulder portion which is given by the first tapering 28 of the corresponding through-hole 18, and converging towards the inside of the rim 12. In the illustrated embodiment, such second rest surface is defined by annular base 48 of the washer 42. The shape of the second rest surface reduces the risk of deformation of the washer 42 during the functioning of the spoke wheel 10.

Preferably, the first rest surface and the second rest surface are substantially parallel.

It shall be noted that the first length 26 of the hole 18 has a higher diameter than the transversal extension of the first end 16a of the spoke 16, leaving an annular ring which is sufficient to the insertion of the suitable spoke wrench.

According to the illustrated embodiment of the present invention, the head 36 and the connecting portion 38 thereof form a single head portion, manufactured as a single piece with the spoke 16, and integral part of the latter. According to a variant embodiment (not illustrated) of the present invention, the head portion formed by the head 36 and the connecting portion 38 thereof is replaced by an internally threaded nipple (not shown) which couples to the spoke 16 upper end 16a due to a complementary outer thread (not illustrated). In such variant embodiment, the nipple portion closer to the spoke 16 has the same configuration, and serves the same function of the head portion described for the embodiment illustrated in Figs. 1 to 7.

It will be appreciated that, the principle of the invention being understood, the embodiments and the implementation details will be able to be widely changed compared to what has been described and illustrated by way of non-limiting example only, without thereby departing from the scope of the invention as defined by the annexed claims.

## Claims

1. A spoke wheel (10), particularly for a tubeless-type tyre, intended to be mounted on a vehicle, particularly on a motor vehicle or a motorcycle; said spoke wheel (10) comprising:
- a rim (12) intended to be radially connected to a tubeless tyre, and defining a cylindrical surface having a ring of through-holes (18);
- a hub (14); and
- a plurality of spokes (16) which are connected at first axial ends (16a) thereof with said rim (12), and at second axial ends (16b) thereof with said hub (14);
- said spokes (16) being fluid-tight connected to said rim (12) through said plurality of through-holes (18);
- the spokes (16) having a respective head portion (36, 38) associated to the first axial end (16a) of one of said spokes (16) and enlarged in the transversal direction relative to said first axial end (16a);
- said head portion (36, 38) being manufactured in a single piece with the associated spoke (16);
**characterized in that**:
- the ring of through-holes (18) is peripherally located in the cylindrical surface of the rim (12);
- between at least one of said spokes (16) and the associated through-hole (18), a respective plurality of sealing members (50) stacked one on the other and located around said at least one spoke (16) is interposed;
- the plurality of sealing members (50) comprises an O-ring;
- the plurality of sealing members (50) axially rests against the rim (12) at an abutting portion (32) obtained in the corresponding through-hole (18);
- the spoke wheel further comprises at least one washer (42) axially located between said head portion (36, 38) and said plurality of sealing members (50); and
- the second axial end (16b) of said at least one spoke (16) has an outer thread (24) engaging with an inner thread (22) of the hub (14) corresponding hole (20).

2. The spoke wheel according to claim 1, wherein said head portion comprises a nipple coupled to the upper end (16a) of said spoke (16).

3. The spoke wheel according to any one of the claims 1 to 2, wherein said at least one washer (42) is axially locked between said head portion (36, 38) and a first shoulder portion (28) obtained in the corresponding through-hole (18).

4. The spoke wheel according to claim 3, wherein said at least one washer (42) defines a respective first rest surface (44) on which the enlarged head (36) of the corresponding spoke (16) is supported, and which converges towards the inside of said rim (12).

5. The spoke wheel according to claim 4, wherein said at least one washer (42) defines a respective second rest surface (48) which is supported by the shoulder portion (28) of the corresponding through-hole (18), and which converges towards the inside of the rim (12).

6. The spoke wheel according to claim 5, wherein the first rest surface (44) and the second rest surface (48) are substantially parallel.

7. The spoke wheel according to any one of the claims 1 to 6, wherein at least one of said through-holes (18) has:
- an axially outer initial length (26) having major diameter;
- a median length (30) having a lower diameter than that of the initial length;
- a first tapering (28) adapted to receive the associated washer (42) and interconnecting said initial length (26) and said median length (30).

8. The spoke wheel according to claim 7, wherein said first tapering (28) is of a substantially frusto-conical shape, converging towards the inside of the rim (12).

9. The spoke wheel according to claim 7 or 8, wherein said at least one through-hole (18) further has:
- a final length (34) having a minimum diameter, and
- a second tapering (32) suitable for acting as an abutting portion for said at least one sealing member (50), and interconnecting said median length (30) and said final length (34).

10. The spoke wheel according to claim 9, wherein said second tapering (32) is of a substantially frusto-conical shape, converging towards the inside of the rim (12).

11. Vehicle, in particular a motor vehicle or a motorcycle, comprising a spoke wheel (10) according to any one of the preceding claims.

## Patentansprüche

1. Speichenrad (10), insbesondere für einen schlauchlosen Reifen, das zum Anbringen an einem Fahrzeug dient, insbesondere an einem Kraftfahrzeug oder Kraftrad, wobei das Speichenrad (10) umfasst:
- eine Felge (12), die zur radialen Verbindung mit einem schlauchlosen Reifen dient und eine zylindrische Oberfläche definiert, die einen Ring von Durchgangslöchern (18) aufweist;
- eine Nabe (14); und
- eine Vielzahl von Speichen (16), die an ihren ersten axialen Enden (16a) mit der Felge (12) verbunden sind und an ihren zweiten axialen Enden (16b) mit der Nabe (14) verbunden sind;
- wobei die Speichen (16) durch die Mehrzahl von Durchgangslöchern (18) mit der Felge (12) fluiddicht verbunden sind;
- wobei die Speichen (16) einen jeweiligen Kopfabschnitt (36, 38) aufweisen, der dem ersten axialen Ende (16a) einer der Speichen (16) zugeordnet ist und in transversaler Richtung relativ zu dem ersten axialen Ende (16a) vergrößert ist;
- wobei der Kopfabschnitt (36, 38) mit der zugeordneten Speiche (16) in einem einzigen Stück hergestellt ist;
**dadurch gekennzeichnet, dass**:
- der Ring von Durchgangslöchern (18) umfangsmäßig in der zylindrischen Oberfläche der Felge (12) angeordnet ist;
- zwischen zumindest einer der Speichen (16) und dem zugeordneten Durchgangsloch (18) eine jeweilige Mehrzahl von Dichtelementen (50) angeordnet ist, die aufeinander gestapelt sind und um die zumindest eine Speiche (16) herum angeordnet sind;
- die Mehrzahl von Dichtelementen (50) einen O-Ring aufweist;
- die Mehrzahl von Dichtelementen (50) an einem in dem entsprechenden Durchgangsloch (18) erhaltenen Stützabschnitt (32) axial auf der Felge (12) sitzt;
- das Speichenrad ferner zumindest eine Beilagscheibe (42) aufweist, die axial zwischen dem Kopfabschnitt (36, 38) und der Mehrzahl von Dichtelementen (50) angeordnet ist; und
- das zweite axiale Ende (16b) der zumindest einen Speiche (16) ein Außengewinde (24) aufweist, das mit einem dem Loch (20) entsprechenden Innengewinde (22) der Nabe (14) in Eingriff steht.

2. Das Speichenrad nach Anspruch 1, worin der Kopfabschnitt einen Nippel aufweist, der mit dem oberen Ende (16a) der Speiche (16) gekoppelt ist.

3. Das Speichenrad nach einem der Ansprüche 1 bis 2, worin die zumindest eine Beilagscheibe (42) zwischen dem Kopfabschnitt (36, 38) und einem in dem entsprechenden Durchgangsloch (18) erhaltenen ersten Schulterabschnitt (28) axial arretiert ist.

4. Das Speichenrad nach Anspruch 3, worin die zumindest eine Beilagscheibe (42) eine jeweilige erste Sitzfläche (44) definiert, auf der der vergrößerte Kopf (36) der entsprechenden Speiche (16) abgestützt ist, und die zur Innenseite der Felge (12) hin konvergiert.

5. Das Speichenrad nach Anspruch 4, worin die zumindest eine Beilagscheibe (42) eine jeweilige zweite Sitzfläche (48) definiert, die von dem Schulterabschnitt (28) des entsprechenden Durchgangslochs (18) abgestützt ist, und die zur Innenseite der Felge (12) hin konvergiert.

6. Das Speichenrad nach Anspruch 5, worin die erste Sitzfläche (44) und die zweite Sitzfläche (48) im Wesentlichen parallel sind.

7. Das Speichenrad nach einem der Ansprüche 1 bis 6, worin zumindest eines der Durchgangslöcher (18) aufweist:
- eine axial äußere Anfangslänge (26) mit größerem Durchmesser;
- eine mittlere Länge (30) mit einem kleineren Durchmesser als jenem der Anfangslänge;
- eine erste Verjüngung (28), die dazu ausgelegt ist, die zugeordnete Beilagscheibe (42) aufzunehmen, und die Anfangslänge (26) und die mittlere Länge (30) verbindet.

8. Das Speichenrad nach Anspruch 7, worin die erste Verjüngung (28) im Wesentlichen kegelstumpfförmig ist und zur Innenseite der Felge (12) hin konvergiert.

9. Das Speichenrad nach Anspruch 7 oder 8, worin das zumindest eine Durchgangsloch (18) ferner aufweist:
- eine Endlänge (34) mit einem minimalen Durchmesser; und
- eine zweite Verjüngung (32), die dazu geeignet ist, als Stützabschnitt für das zumindest eine Dichtelement (50) zu wirken, und die die mittlere Länge (30) mit der Endlänge (34) verbindet.

10. Das Speichenrad nach Anspruch 9, worin die zweite Verjüngung (32) im Wesentlichen kegelstumpfförmig ist und zur Innenseite der Felge (12) hin konvergiert.

11. Fahrzeug, insbesondere ein Kraftfahrzeug oder Kraftrad, das ein Speichenrad (7) nach einem der vorhergehenden Ansprüche aufweist.

## Revendications

1. Roue à rayons (10), en particulier pour un pneu de type sans chambre à air, prévue pour être montée sur un véhicule, en particulier sur un véhicule à moteur ou une motocyclette; ladite roue à rayons (10) comprenant:
une jante (12) prévue pour être raccordée de manière radiale à un pneu sans chambre à air, et définissant une surface cylindrique ayant un anneau de trous de passage (18);
un moyeu (14); et
une pluralité de rayons (16) qui sont raccordés au niveau de leurs premières extrémités axiales (16a) avec ladite jante (12) et au niveau de leurs secondes extrémités axiales (16b) avec ledit moyeu (14);
lesdits rayons (16) étant raccordés de manière étanche au fluide à ladite jante (12) par ladite pluralité de trous de passage (18);
les rayons (16) ayant une partie de tête (36, 38) respective associée à la première extrémité axiale (16a) de l'un desdits rayons (16) et agrandie dans la direction transversale par rapport à ladite première extrémité axiale (16a) ;
ladite partie de tête (36, 38) étant fabriquée d'un seul tenant avec le rayon (16) associé;
**caractérisée en ce que**:
l'anneau de trous de passage (18) est positionné de manière périphérique dans la surface cylindrique de la jante (12);
entre au moins l'un desdits rayons (16) et le trou de passage (18) associé, une pluralité respective d'éléments d'étanchéité (50) empilés les uns sur les autres et positionnés autour dudit au moins un rayon (16) est intercalée;
la pluralité d'éléments d'étanchéité (50) comprend un joint torique;
la pluralité d'éléments d'étanchéité (50) repose de manière axiale contre la jante (12) dans une partie de butée (32) obtenue dans le trou de passage (18) correspondant;
la roue à rayons comprend en outre au moins une rondelle (42) positionnée de manière axiale entre ladite partie de tête (36, 38) et ladite pluralité d'éléments d'étanchéité (50); et la seconde extrémité axiale (16b) dudit au moins un rayon (16) a un filetage externe (24) se mettant en prise avec un filetage interne (22) du moyeu (14) correspondant au trou (20) .

2. Roue à rayons selon la revendication 1, dans laquelle ladite partie de tête comprend un écrou couplé à l'extrémité supérieure (16a) dudit rayon (16).

3. Roue à rayons selon l'une quelconque des revendications 1 à 2, dans laquelle ladite au moins une rondelle (42) est bloquée de manière axiale entre ladite partie de tête (36, 38) et une première partie d'épaulement (28) obtenue dans le trou de passage (18) correspondant.

4. Roue à rayons selon la revendication 3, dans laquelle ladite au moins une rondelle (42) définit une première surface de repos (44) respective sur laquelle la tête (36) agrandie du rayon (16) correspondant est supportée, et qui converge vers l'intérieur de ladite jante (12).

5. Roue à rayons selon la revendication 4, dans laquelle ladite au moins une rondelle (42) définit une seconde surface de repos (48) respective qui est supportée par la partie d'épaulement (28) du trou de passage (18) correspondant, et qui converge vers l'intérieur de la jante (12).

6. Roue à rayons selon la revendication 5, dans laquelle la première surface de repos (44) et la seconde surface de repos (48) sont sensiblement parallèles.

7. Roue à rayons selon l'une quelconque des revendications 1 à 6, dans laquelle au moins l'un des trous de passage (18) a:
une longueur initiale axialement externe (26) ayant un grand diamètre;
une longueur médiane (30) ayant un plus petit diamètre que celui de la longueur initiale;
une première conicité (28) adaptée pour recevoir la rondelle (42) associée et interconnectant ladite longueur initiale (26) et ladite longueur médiane (30).

8. Roue à rayons selon la revendication 7, dans laquelle ladite première conicité (28) a une forme sensiblement tronconique, convergeant vers l'intérieur de la jante (12).

9. Roue à rayons selon la revendication 7 ou 8, dans laquelle ledit au moins un trou de passage (18) a en outre:
une longueur finale (34) ayant un diamètre minimum, et
une seconde conicité (32) appropriée pour servir de partie de butée pour ledit au moins un élément d'étanchéité (50) et interconnectant ladite longueur médiane (30) et ladite longueur finale (34).

10. Roue à rayons selon la revendication 9, dans laquelle ladite seconde conicité (32) a une forme sensiblement tronconique, convergeant vers l'intérieur de la jante (12).

11. Véhicule, en particulier un véhicule à moteur ou une motocyclette, comprenant une roue à rayons (10) selon l'une quelconque des revendications précédentes.
